# FASCICULE DE BREVET EUROPEEN

(11) **EP 2 291 633 B1**
(45) Date de publication et mention de la délivrance du brevet: **05.10.2011**
(21) Numéro de dépôt: 09753881.3
(22) Date de dépôt: 26.05.2009
(51) Int. Cl.: G01N 1/38

(54) **APPAREIL DE DILUTION D'UN ÉCHANTILLON**
VORRICHTUNG ZUR AUFLÖSUNG EINER PROBE
DEVICE FOR DILUTING A SAMPLE

(30) Priorité: 30.05.2008 FR 0853562
(43) Date de publication de la demande: 09.03.2011
(73) Titulaire: AES Chemunex, 35270 Combourg (FR)
(72) Inventeur: SEZNEC, Stéphane, F-35310 Chavagne (FR)
(74) Mandataire: Roussel, Eric Marcel Henri
(86) Numéro de dépôt international: PCT/EP2009/056380
(87) Numéro de publication internationale: WO 2009/144226

(56) Documents cités:
- EP-B- 0 251 754
- EP-B- 1 029 808
- WO-A-2007/113561
- FR-A- 2 579 749
- US-A- 2 853 210
- US-A- 4 350 186

## Description

L'invention concerne un appareil de dilution d'un échantillon.

De tels appareils sont utilisés pour introduire dans un récipient contenant un échantillon un diluant liquide pour obtenir un taux de dilution prescrit.

La mixture ainsi obtenue, avec l'échantillon éventuellement broyé ultérieurement dans un autre appareil appelé malaxeur si l'échantillon est solide, doit ensuite subir une analyse microbiologique par un laboratoire.

L'appareil comporte habituellement un support pour recevoir un récipient contenant l'échantillon, dans lequel un embout doit déverser le diluant liquide.

Différents appareils de dilution sont connus.

Le document EP-A-1 707 939 décrit un appareil de dilution gravimétrique, dans lequel une poche de diluant est fixée verticalement au-dessus de l'ouverture du sac contenant l'échantillon. Une valve est prévue sur le tuyau inférieur de sortie de la poche pour laisser tomber du diluant dans le sac sous la commande d'un circuit de contrôle.

Le document US-A-4 350 186 décrit un dispositif de dilution d'un échantillon dans un récipient, pour l'envoi d'un diluant liquide dans le récipient par une première valve rapide et une deuxième valve lente alimentées en diluant par un réservoir via une pompe. Les valves sont supportées au-dessus du récipient par un barreau métallique et un organe horizontal, le récipient se trouvant sur un socle comportant un système de pesée. Le dispositif comporte également un contrôleur possédant une ligne de verrouillage, qui est couplée à un interrupteur, qui est fixée au châssis du socle et qui permet aux valves fixées à l'organe horizontal d'opérer lorsque le barreau est mis en rotation de telle sorte que l'interrupteur soit fermé et que les valves soient au-dessus du récipient.

Par ailleurs, on connaît également des dispositifs autres que des appareils de dilution d'un échantillon.

Le document EP-B-1 029 808 concerne une tête de distribution d'un produit liquide, par exemple cosmétique, dans lequel c'est l'utilisateur qui doit faire tourner manuellement des moyens de positionnement pour pouvoir appuyer sur un bouton-poussoir devant commander l'ouverture d'une valve de distribution du produit.

Le document WO-2007/113 561 décrit un dispositif de préparation d'échantillons à l'aide d'une seringue fixée sur un support et actionnée par un moteur monté sur le support.

Le document US-A-2 853 210 concerne un dispositif de distribution d'un liquide d'une bouteille avec un corps extérieur qu'un utilisateur doit faire tourner manuellement par rapport à un corps intérieur pour passer entre une position de distribution et une position de fermeture.

Le document FR-A-2 579 749 décrit un dispositif automatique de prélèvement et de dilution de produit liquide circulant en continu dans des circuits.

Le document EP-B-0 251 744 concerne un dispositif de distribution d'un fluide comportant deux pompes fixées sur le couvercle d'un récipient, dont l'une comporte un moteur servant à doser par incréments un volume spécifique de fluide à fournir.

Un objectif de l'invention est, dans un appareil de dilution d'un échantillon, de faciliter les manipulations tant du récipient contenant l'échantillon que de l'appareil devant y introduire le diluant.

Un autre objectif est, dans un appareil de dilution d'un échantillon, d'éviter que l'embout de distribution du diluant soit contaminé par l'échantillon liquide ou par des particules de l'échantillon lorsque l'opération de dilution dans le récipient est terminée et que le récipient doit être retiré, du fait que le diluant liquide atteint un certain niveau dans le récipient.

Un autre objectif est d'améliorer l'ergonomie de l'appareil de dilution d'un échantillon.

Un autre objectif est de diminuer les coûts de fabrication de l'appareil de dilution d'un échantillon.

L'invention a pour objet un appareil de dilution d'un échantillon suivant la revendication 1.

Suivant des modes de réalisation de l'invention :
- Le moteur est situé dans la partie supérieure du montant sous la coiffe.
- La coiffe comporte une surface extérieure située en face de la surface extérieure de la partie supérieure du montant.
- L'embout a sa sortie coudée par rapport à sa partie servant à la fixation à la coiffe.
- La coiffe comporte au moins un organe pour la fixation amovible de l'embout, cet organe de fixation servant également à la liaison en rotation de la coiffe au moteur.
- Le moteur est apte à faire tourner un axe rendu solidaire en rotation avec la coiffe par des moyens d'accouplement pour faire tourner la coiffe et l'embout entre l'une et l'autre des première et deuxième positions.
- Les moyens d'accouplement comportent une pièce fixée sur l'axe, la coiffe comportant des moyens pour la fixation amovible de l'embout, servant également à la fixation à la pièce fixée à l'axe.
- La coiffe comporte des première et deuxième butées coopérant avec au moins un organe d'arrêt fixe par rapport au montant pour l'arrêt de la rotation de la coiffe respectivement dans les première et deuxième positions par appui de l'organe d'arrêt respectivement contre les première et deuxième butées.
- L'appareil comporte un moyen de détection d'approche de la première position et/ou de la deuxième position coopérant avec des moyens automatiques de commande pour arrêter la rotation du moteur avant que l'organe d'arrêt touche la butée associée.
- Le moyen de détection d'approche est optique pour détecter la présence d'une lumière ou paroi située dans la coiffe, de telle sorte que la détection d'un bord délimitant la lumière et la paroi corresponde à une position angulaire de la coiffe située à proximité de la première et/ou deuxième position sans que l'organe d'arrêt touche la butée associée.

L'invention sera mieux comprise à la lecture de la description qui va suivre, donnée uniquement à titre d'exemple non limitatif en référence aux dessins annexés sur lesquels :
- la figure 1 est une vue schématique en perspective d'un mode de réalisation de l'appareil de dilution suivant l'invention, dans une première position de distribution de diluant ;
- la figure 2 est une vue schématique en perspective de l'appareil suivant la figure 1 dans une deuxième position d'absence de distribution de diluant,

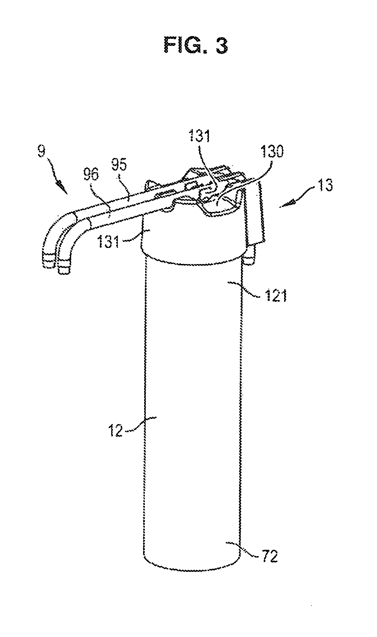

- la figure 3 est une vue schématique en perspective du dispositif de support et de déplacement de l'embout de distribution de diluant sur l'appareil des figures 1 et 2,

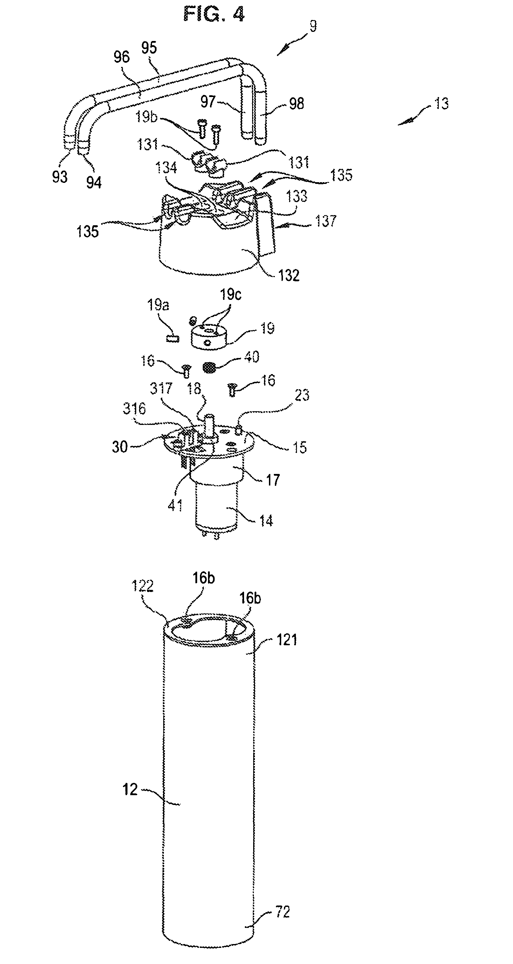

- la figure 4 est une vue schématique en perspective éclatée du dispositif de support et de déplacement de l'embout suivant la figure 3, et
- la figure 5 est une vue schématique en perspective de l'intérieur de la partie supérieure du dispositif de support de l'embout suivant les figures 3 et 4.

Aux figures, l'appareil 1 de dilution suivant l'invention comporte un socle 2 supportant les différents éléments de l'appareil, à savoir :
- un panneau 3 de contrôle comportant un écran 4 de contrôle et des boutons 5 de commande,
- un support 6 de récipient devant contenir l'échantillon à diluer,
- un système de pesée du contenu du récipient lorsqu'il se trouve sur le support 6, un moyen 7 de liaison mécanique étant prévu entre le support 6 et le système de pesée non représenté et situé à l'intérieur du socle 2,
- une ou plusieurs pompes 8, par exemple péristaltiques 81, 82, par exemple situées sur un ou plusieurs flancs 21, 22 du socle 2, pour envoyer un diluant liquide depuis un réservoir de diluant non représenté vers un embout associé 91, 92 par des canalisations 101, 102, flexibles dans le cas de pompes péristaltiques,
- un dispositif 11 de support et de déplacement du ou des embouts 91,92.

Bien entendu, tout autre type d'interface de commande du fonctionnement de l'appareil autre que les éléments 3, 4 et 5 pourrait être prévu.

Il peut être prévu un seul embout, canalisation et pompe associée pour envoyer du diluant liquide depuis un seul réservoir vers l'embout par la canalisation ou plusieurs embouts, canalisations, pompes et réservoirs de diluants liquides associés pour pouvoir distribuer des types de diluant différents par les embouts depuis les réservoirs par les canalisations. Ci-dessous, on désigne d'une manière générale le ou les embouts par la référence 9, la ou les canalisations associées par la référence 100, la ou les pompes associées par la référence 8.

L'interface 3 de commande, le support 6 et le dispositif 11 sont par exemple situés l'un derrière l'autre de l'avant vers l'arrière sur le socle 2.

Le récipient devant contenir l'échantillon et recevoir le diluant liquide, non représenté aux figures, et devant être fixé au moins temporairement sur le support 6 pour introduction du diluant dans celui-ci comporte une ouverture supérieure pour le passage du diluant et est par exemple formé par un sac pouvant être en matière plastique souple. Dans ce cas, le support 6 est par exemple formé par deux plaques 61, 62 verticales parallèles, s'étendant par exemple de la droite vers la gauche, écartées entre elles pour présenter un passage supérieur et des passages latéraux pour le récipient, les deux plaques 61, 62 étant reliées entre elles par une partie inférieure 63 par exemple d'une seule pièce avec elles, reliées au système de pesée.

Le système de pesée du contenu du récipient et l'interface 3 de commande par l'utilisateur sont reliés à un système d'envoi du diluant dans l'embout 9 selon une quantité déterminée, pour respecter un taux de dilution sélectionné sur l'interface 3, par exemple grâce au bouton 5, ce taux de dilution étant affiché sur l'écran 4.

Le dispositif 11 de support et de déplacement de l'embout 9 comporte un montant 12 fixé sur le socle 2, ce montant 12 étant par exemple cylindrique et notamment circulaire ainsi que représenté. Le montant 12 est surmonté d'une coiffe rotative 13 de support de l'embout 9.

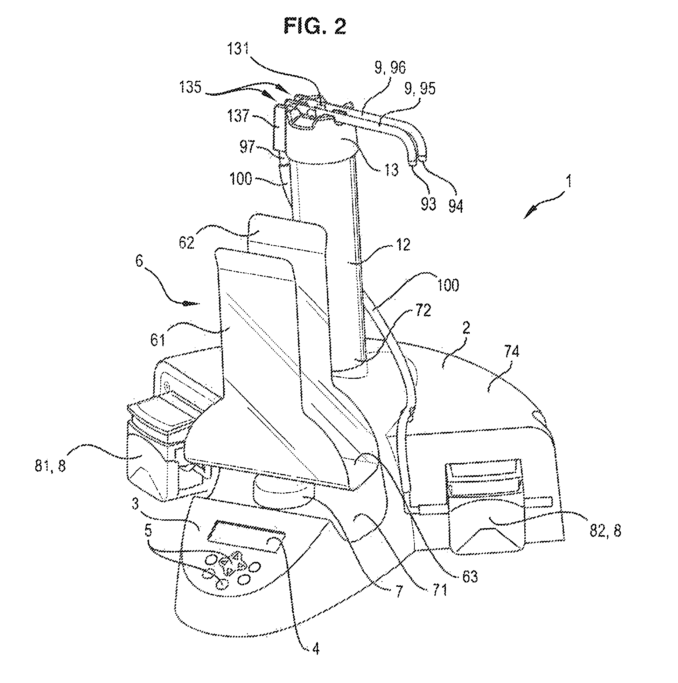

Dans la deuxième position de repos représenté à la figure 2, la coiffe 13 et l'embout 9 sont positionnés de manière à ce que l'embout 9 et sa sortie 93, 94 de diluant soit écartée du support 6 du récipient, par exemple dans une position latérale à droite (ainsi que représenté) ou à gauche par rapport au support 6 situé devant le montant 12. Cette deuxième position correspond à l'absence d'envoi de diluant dans l'embout 9 et à la position d'arrêt de l'appareil. Lorsque l'utilisateur veut mettre en marche l'appareil, il commande l'interface 3 pour choisir le taux de dilution souhaité et/ou pour mettre en marche l'appareil au taux de dilution imposé par celui-ci.

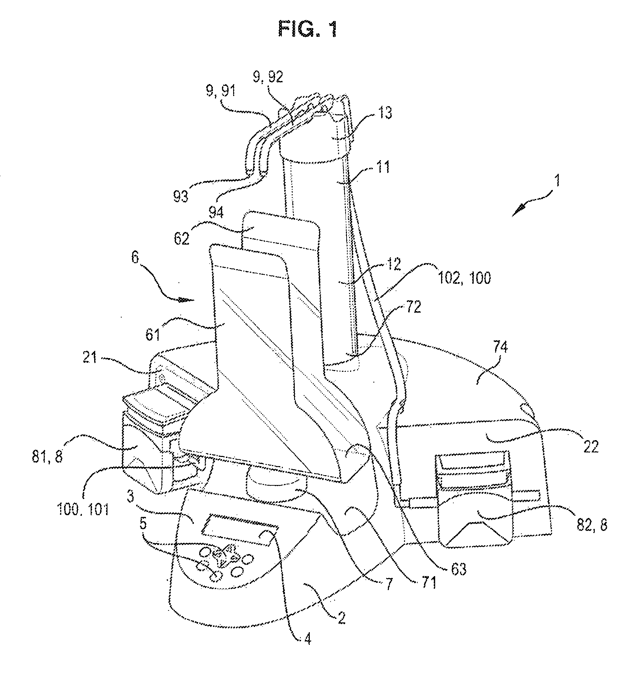

La coiffe 13 tourne alors sur le montant 12 depuis la deuxième position de repos de la figure 2 à la première position active représentée à la figure 1. Dans cette première position, la sortie 93, 94 de l'embout 9 se trouve au-dessus de l'ouverture du récipient et au-dessus du support 6, par exemple entre les plaques 61, 62 dans le mode de réalisation représenté.

Des moyens d'actionnement prévus dans le socle 2 font alors automatiquement fonctionner la pompe 8 pour l'envoi de diluant par la canalisation 100 dans l'embout 9. Le diluant sort alors de l'embout 9 par sa sortie associée 93, 94 pour arriver dans le récipient. La quantité de diluant délivrée par l'embout 9 dans le récipient a été automatiquement calculée par les moyens d'actionnement en fonction de la pesée effectuée et du taux de dilution sélectionné par l'utilisateur, ainsi que cela est connu.

Par exemple, une pesée initiale est effectuée lorsque le récipient est vide, une deuxième pesée est effectuée pour connaître le poids de l'échantillon ayant été introduit dans le sac, et une pesée est effectuée pendant l'introduction de diluant dans le récipient pour respecter la quantité de diluant déterminée en fonction du taux de dilution.

La sortie 93, 94 de l'embout se trouve à distance de la coiffe 13 et dépasse de celle-ci. La sortie 93, 94 de l'embout 9 est par exemple coudée par rapport à sa partie longitudinale 95, 96 à laquelle elle est reliée pour l'envoi de diluant. Cette partie longitudinale 95, 96 est par exemple celle fixée à la coiffe 13. La coiffe 13 comporte par exemple à cet effet sur sa surface supérieure 130 des moyens 131 de fixation de l'embout 9, par exemple formés par un ou plusieurs clips 131 pour chaque embout 9.

Un moteur 14 d'entraînement en rotation de la coiffe 13 est logé dans la partie supérieure 121 du montant 12. Au moins la partie du montant 12 située en face de la coiffe 13 est cylindrique circulaire, pour permettre la rotation de la coiffe 13 par rapport à cette partie, formée dans le mode de réalisation représenté par l'extrémité supérieure 122 du montant 12.

Dans le mode de réalisation représenté, la coiffe 13 entoure la partie supérieure 121 du montant 12 et est par exemple formée par une demi-coque, dont la paroi extérieure 132 est positionnée contre la surface extérieure de la partie supérieure 121, ce qui permet d'empêcher que du liquide accidentellement projeté de haut en bas pénètre dans le montant 12.

Dans le mode de réalisation représenté, le support 6 est supporté par le moyen 7 dans un creux 71 du dessus du socle 2 entre le montant 12 et l'interface 3, par exemple orientée vers l'avant, ce qui permet d'empêcher que du liquide accidentellement qui serait projeté à côté du récipient salisse l'interface 3 ou le reste du socle 2 et le montant 12. Le bas 72 du montant 12 est par exemple situé au-dessus du bord du creux 71, avec par exemple la surface supérieure 74 du socle 2 entre le montant et le creux 71, inclinée vers l'avant, c'est-à-dire du montant 12 vers le creux 71.

Le montant 12 est par exemple creux de bas en haut et est par exemple tubulaire. Le moteur 14 est fixé dans le montant 12 par l'intermédiaire d'une platine 15 elle-même fixée à la partie supérieure 21 par des moyens de fixation 16. La platine 15 est par exemple en forme de disque de diamètre correspondant au diamètre extérieur de l'extrémité supérieure 122 pour reposer sur le dessus du montant 12, les moyens 16 de fixation étant formé par exemple par une ou plusieurs vis fixées dans des filetages correspondants 16b de l'extrémité 122. Le moteur 14 est retenu par tout moyen approprié sous la platine 15 dans la partie supérieure 121 du montant 12. Le moteur 14 fait tourner un axe 18 solidaire en rotation de la coiffe 13 par l'intermédiaire de moyens de liaison 19. Ces moyens 19 de liaison en rotation sont par exemple formés par une unique pièce ou rondelle 19 d'accouplement entre l'axe 18 et la coiffe 13. Dans le mode de réalisation représenté, la rondelle 19 est fixée, par exemple par une vis latérale 19a autour de l'axe 18. Le ou les clips 131 ou tout autre moyen 131 de fixation de l'embout 9 à la coiffe 13 servent à la fois à la fixation du ou des embouts 9 et à la fixation à la pièce 19 d'accouplement à l'axe rotatif 18, par exemple par l'intermédiaire de moyens 19b de fixation à la pièce 19, tels que par exemple des vis 19b traversant le ou les clips 131 et vissées dans des filetages 19c situés sur la surface supérieure de la pièce 19, la coiffe 13 comportant sur sa surface supérieure 133 un ou plusieurs trous 134 de passage et d'appui des clips 131 sur leurs bords. La surface supérieure 133 de la coiffe 13 comporte sur l'un et/ou l'autre de ses bords des rainures 135 de réception et de positionnement de la partie longitudinale 95, 96 de l'embout 9 associé, les moyens 131 étant par exemple situés dans la partie centrale de la surface supérieure 133 entre deux parties des rainures 135. A son extrémité éloignée de sa sortie 93, 94, la partie centrale 95, 96 de l'embout 9 est prolongé par un tronçon coudé 97, 98 relié à la canalisation 100 pour l'entrée du diluant dans l'embout 9. La rainure 135 du bord arrière de la coiffe 13 est prolongée vers le bas par une rainure 137 de réception et de positionnement des tronçons 97, 98 d'entrée de l'embout 9.

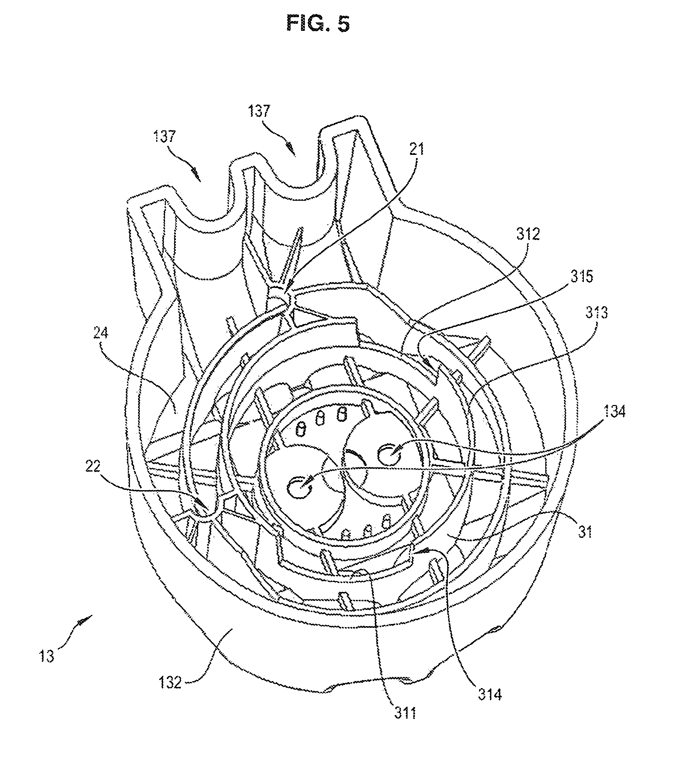

Dans le mode de réalisation représenté à la figure 5, la partie intérieure de la coiffe 13 comporte des première et deuxième butées 21, 22 d'arrêt de rotation respectivement dans les première et deuxième positions, ces butées 21, 22 coopérant avec un organe 23 d'arrêt fixé au montant 12, formé par exemple par un ergot 23 dépassant du dessus de la platine 15. Une zone 24 de passage de l'organe 23 entre les butées 21 et 22 est prévue dans la coiffe 13 lors de la rotation entre l'une et l'autre des première et deuxième positions.

Un moyen 30 de détection d'approche des première et deuxième positions de la coiffe 13 est prévu sur le montant 12. Ce moyen 30 de détection d'approche coopère par exemple avec des parties correspondantes 31 situées à l'intérieur de la coiffe 13, dont il détecte le déplacement en rotation jusqu'à proximité des première et deuxième positions. Ce moyen 30 de détection est par exemple optique pour détecter la présence de parois ou de lumières 31 prévues dans la coiffe 13 et positionnées par rapport aux première et deuxième positions. Dans le mode de réalisation représenté, il est par exemple prévu une première lumière 311 associée à la première position, cette première lumière 311 étant séparée d'une deuxième lumière 312 associée à la deuxième position par une paroi 313 faisant barrage au signal optique du moyen 30 de détection, alors que les lumières 311, 312 ne font pas barrage à cette détection. Les lumières 311, 312 et la paroi 313 sont prévues dans une paroi intérieure de la coiffe 13 faisant le tour au moins partiellement de l'axe 18. Le premier bord 314 séparant la première lumière 311 de la paroi 313 d'obturation est positionné par rapport à la première butée 21 de manière à être rencontré par le moyen 30 lors de la rotation de la coiffe 13 de la deuxième position à la première position, avant que cette première position ne soit atteinte et avant que l'organe 23 touche la première butée 21. De même, le deuxième bord 315 séparant la deuxième lumière 312 de la paroi 313 d'obturation est positionné par rapport à la deuxième butée 22 de manière à être rencontré par le moyen 30 lors de la rotation de la coiffe 13 de la première position à la deuxième position, avant que cette deuxième position ne soit atteinte et avant que l'organe 23 touche la deuxième butée 22. Le moyen 30 est par exemple formé par une fourche optique fixée sur la platine 15 et apte à intercepter les lumières 311, 312 et la paroi 313 d'obturation lorsque celles-ci se trouvent entre les deux dents 316, 317 de la fourche 30 entre les première et deuxième positions. La détection par le moyen 30 du franchissement du premier bord 314 lors de la rotation de la deuxième à la première position déclenche par des moyens automatiques appropriés l'arrêt de la rotation du moteur 14, entraînant l'arrêt de la rotation de la coiffe 13 et de l'embout 9. La détection par le moyen 30 du franchissement du deuxième bord 315 lors de la rotation de la première à la deuxième position déclenche par des moyens automatiques appropriés l'arrêt de la rotation du moteur 14, entraînant l'arrêt de la rotation de la coiffe 13 et de l'embout 9.

Dans le mode de réalisation représenté, un moyen élastique 40 est inséré sur l'axe 18 de rotation entraîné par le moteur 14 et sous le moyen 19 d'accouplement à la coiffe 13, pour permettre un degré de liberté entre eux en cas d'arc-boutement de la coiffe 13 sur le montant 12, dans le cas où le moteur 14 ne serait pas complètement arrêté de tourner lorsque l'organe 23 vient en appui contre la butée 21 ou 22 en arrivant dans la première ou la deuxième position. Ce moyen 40 est par exemple formé par un ressort de compression, par exemple hélicoïdal, enfilé autour de l'axe 18 entre un anneau inférieur 41 entourant la base de l'axe 18 et la surface inférieure du moyen 19.

Des moyens de connexion électrique avec l'unité de contrôle de l'appareil situé dans le socle 12 sont prévus pour l'alimentation électrique et la commande du moteur 14 ainsi que pour l'alimentation électrique et la réception du signal de détection de rotation envoyé par le moyen 30. Le moteur 14 inclut éventuellement un motoréducteur 17 entre son rotor et l'axe rotatif 18 solidaire en rotation de la coiffe 13.

Des moyens automatiques sont prévus dans le socle 12 pour, en réponse à l'actionnement de l'interface 3 par l'utilisateur, faire se déplacer la coiffe 13 et l'embout 9 de la deuxième position de repos à la première position active de déversement de diluant, puis arrêter ce déversement à la dose prescrite, et refaire passer la coiffe 13 et l'embout 9 de la première position active à la deuxième position de repos.

## Revendications

1. Appareil de dilution d'un échantillon, comprenant :
- au moins un support (6) prévu sur un socle (2) pour recevoir un récipient devant contenir l'échantillon et comportant une ouverture supérieure,
- au moins un embout (9) de distribution d'un diluant liquide, comportant une sortie (93, 94) pour le diluant,
- un système d'envoi du diluant dans l'embout (9) selon une quantité déterminée, muni de moyens de commande,
- des moyens, comportant un montant (12) s'étendant vers le haut à partir du socle (2), pour supporter et déplacer l'embout (9) par rapport au support (6) de récipient entre l'une et l'autre d'une première position, dans laquelle la sortie (93, 94) de l'embout (9) se trouve au-dessus de l'ouverture du récipient pour permettre l'envoi du diluant dans le récipient par l'embout (9), et d'une deuxième position, dans laquelle la sortie (93, 94) de l'embout (9) est plus écartée du récipient que dans la première position,
**caractérisé en ce qu'**il comporte un moteur rotatif (14) logé à l'intérieur d'une coiffe (13) et/ou du montant (12), pour faire tourner par rapport au montant (12) la coiffe (13) servant au support de l'embout (9) de distribution du diluant liquide entre l'une et l'autre des première et deuxième positions, la deuxième position de la sortie (93, 94) de l'embout (9) étant latérale par rapport à sa première position, le montant (12) étant fixe sur le socle (2) par rapport au support (6) de récipient et étant surmonté de la coiffe (13) montée rotative sur le montant (12) entre l'une et l'autre des première et deuxième positions.

2. Appareil suivant la revendication 1, **caractérisé en ce que** le moteur (14) est situé dans la partie supérieure (121) du montant (12) sous la coiffe (13).

3. Appareil suivant l'une quelconque des revendications précédentes, **caractérisé en ce que** la coiffe (13) comporte une surface extérieure (132) située en face de la surface extérieure de la partie supérieure (121) du montant (12).

4. Appareil suivant l'une quelconque des revendications précédentes, **caractérisé en ce que** l'embout (9) a sa sortie (93, 94) coudée par rapport à sa partie (95, 96) servant à la fixation à la coiffe (13).

5. Appareil suivant l'une quelconque des revendications précédentes, **caractérisé en ce que** la coiffe (13) comporte au moins un organe (131) pour la fixation amovible de l'embout (9), cet organe (131) de fixation servant également à la liaison en rotation de la coiffe (13) au moteur (14).

6. Appareil suivant l'une quelconque des revendications précédentes, **caractérisé en ce que** le moteur (14) est apte à faire tourner un axe (18) rendu solidaire en rotation avec la coiffe (13) par des moyens (19) d'accouplement pour faire tourner la coiffe (13) et l'embout (9) entre l'une et l'autre des première et deuxième positions.

7. Appareil suivant la revendication 6, **caractérisé en ce que** les moyens (19) d'accouplement comportent une pièce (19) fixée sur l'axe (18), la coiffe (13) comportant des moyens (131) pour la fixation amovible de l'embout (9), servant également à la fixation à la pièce (19) fixée à l'axe (18).

8. Appareil suivant l'une quelconque des revendications précédentes, **caractérisé en ce que** la coiffe (13) comporte des première et deuxième butées (21, 22) coopérant avec au moins un organe (23) d'arrêt fixe par rapport au montant (12) pour l'arrêt de la rotation de la coiffe (13) respectivement dans les première et deuxième positions par appui de l'organe (18) d'arrêt respectivement contre les première et deuxième butées (21, 22).

9. Appareil suivant la revendication 8, **caractérisé en ce qu'**il comporte un moyen (30) de détection d'approche de la première position et/ou de la deuxième position coopérant avec des moyens automatiques de commande pour arrêter la rotation du moteur (14) avant que l'organe (23) d'arrêt touche la butée (21, 22) associée.

10. Appareil suivant la revendication 9, **caractérisé en ce que** le moyen (30) de détection d'approche est optique pour détecter la présence d'une lumière (311, 312) ou paroi (313) située dans la coiffe (13), de telle sorte que la détection d'un bord (314, 315) délimitant la lumière et la paroi corresponde à une position angulaire de la coiffe (13) située à proximité de la première et/ou deuxième position sans que l'organe (23) d'arrêt touche la butée (21, 22) associée.

## Claims

1. A device for dilution of a sample, comprising:
- at least one support (6) provided on a base (2) for receiving a container having to contain the sample and comprising an upper opening,
- at least one end piece (9) for distribution of a liquid diluent, comprising an outlet (93, 94) for the diluent,
- a system for conveying of the diluent to the end piece (9) according to a determined quantity, fitted with control means,
- means comprising an upright (12) extending up from the base (2), for supporting and shifting the end piece (9) relative to the container support (6) between one and the other of a first position, in which the outlet (93, 94) of the end piece (9) is above the opening of the container to allow sending the diluent to the container via the end piece (9), and of a second position, in which the outlet (93, 94) of the end piece (9) is further away from the container than in the first position,
**characterised in that** it comprises a rotary motor (14) housed inside a cover (13) and/or the upright (12), for turning relative to the upright (12) the cover (13) serving as support of the end piece (9) for distribution of the diluent liquid between one and the other of the first and second positions, the second position of the outlet (93, 94) of the end piece (9) being lateral relative to its first position, the upright (12) being fixed on the base (2) relative to the container support (6) and being topped by the cover (13) mounted rotatively on the upright (12) between one and the other of the first and second positions.

2. A device as claimed in Claim 1, **characterised in that** the motor (14) is located in the upper part (121) of the upright (12) under the cover (13).

3. A device as claimed in any one of the preceding claims, **characterised in that** the cover (13) comprises an external surface (132) located opposite the external surface of the upper part (121) of the upright (12).

4. A device as claimed in any one of the preceding claims, **characterised in that** the end piece (9) has its outlet (93, 94) bent relative to its part (95, 96) serving as attachment to the cover (13).

5. A device as claimed in any one of the preceding claims, **characterised in that** the cover (13) comprises at least one member (131) for detachable attachment of the end piece (9), this attachment member (131) also serving as connection in rotation of the cover (13) to the motor (14).

6. A device as claimed in any one of the preceding claims, **characterised in that** the motor (14) is capable of turning an axle (18) made solid in rotation with the cover (13) by coupling means (19) for turning the cover (13) and the end piece (9) between one and the other of the first and second positions.

7. A device as claimed in Claim 6, **characterised in that** the coupling means (19) comprise a piece (19) fixed on the axle (18), the cover (13) comprising means (131) for detachable attachment of the end piece (9), also serving as attachment to the piece (19) fixed to the axle (18).

8. A device as claimed in any one of the preceding claims, **characterised in that** the cover (13) comprises first and second stops (21, 22) cooperating with at least one stop member (23) fixed relative to the upright (12) for stopping the rotation of the cover (13) respectively in the first and second positions by support of the stop member (18) respectively against the first and second stops (21, 22).

9. A device as claimed in Claim 8, **characterised in that** it comprises means (30) of detection of approach of the first position and/or of the second position cooperating with automatic control means for stopping the rotation of the motor (14) before the stop member (23) touches the associated stop (21, 22).

10. A device as claimed in Claim 9, **characterised in that** the means (30) of detection of approach are optical for detecting the presence of a hole (311, 312) or wall (313) located in the cover (13), such that detection of an edge (314, 315) delimiting the hole and the wall corresponds to an angular position of the cover (13) located close to the first and/or second position without the stop member (23) touching the associated stop (21, 22).

## Patentansprüche

1. Vorrichtung zum Verdünnen einer Probe, mit:
- mindestens einem auf einem Sockel (2) angeordneten Träger (6) zur Aufnahme eines die Probe enthaltenden Behälters, der eine obere Öffnung aufweist,
- mindestens einem Abgaberohr (9) zur Abgabe einer Verdünnungsflüssigkeit, das einen Auslass (93,94) für das Verdünnungsmittel aufweist,
- einem mit Steuereinrichtungen versehenen Zuführungssystem zum Zuführen des Verdünnungsmittels in das Rohr (9) gemäß einer vorgegebenen Menge,
- Einrichtungen mit einem sich von dem Sockel (2) aus nach oben erstreckenden Ständer (12) zum Halten und Verschieben des Rohrs (9) bezüglich des Behälterträgers (6) zwischen einer ersten Position, in welcher der Auslass (93,94) des Rohrs (9) sich oberhalb der Öffnung des Behälters befindet, um die Zuführung des Verdünnungsmittels über das Rohr (9) in den Behälter zu erlauben, und einer zweiten Position, in welcher der Auslass (93,94) des Rohrs (9) weiter von dem Behälter entfernt ist als in der ersten Position,
**dadurch gekennzeichnet, dass** sie einen im Innern einer Kappe (13) und/oder des Ständers (12) untergebrachten Rotationsmotor (14) aufweist, um die Kappe (13), die als Träger des Verdünnungsflüssigkeit-Abgaberohrs (9) dient, bezüglich des Ständers (12) zwischen der ersten und zweiten Position hin und her zu drehen, wobei die zweite Position des Auslasses (93,94) des Rohrs (9) seitlich bezüglich seiner ersten Position ist, wobei der Ständer (12) stationär bezüglich des Behälterträgers (6) an dem Sockel (2) angeordnet ist und mit der Kappe (13) gekrönt ist, die zwischen der ersten und zweiten Position hin und her drehbar an dem Ständer (12) angebracht ist.

2. Vorrichtung nach Anspruch 1, **dadurch gekennzeichnet, dass** sich der Motor (14) in dem oberen Teil (121) des Ständers (12) unterhalb der Kappe (13) befindet.

3. Vorrichtung nach einem der vorstehenden Ansprüche, **dadurch gekennzeichnet, dass** die Kappe (13) eine Außenfläche (132) aufweist, die gegenüber der Außenfläche des oberen Teils (121) des Ständers (12) angeordnet ist.

4. Vorrichtung nach einem der vorstehenden Ansprüche, **dadurch gekennzeichnet, dass** das Rohr (9) seinen Auslass (93,94) bezüglich seines Teils (95,96), der zur Befestigung an der Kappe (13) dient, knieförmig gebogen hat.

5. Vorrichtung nach einem der vorstehenden Ansprüche, **dadurch gekennzeichnet, dass** die Kappe (13) mindestens eine Einrichtung (131) zum lösbaren Befestigen des Rohrs (9) aufweist, wobei dieses Befestigungselement (131) ebenfalls zur drehfesten Verbindung der Kappe (13) mit dem Motor (14) dient.

6. Vorrichtung nach einem der vorstehenden Ansprüche, **dadurch gekennzeichnet, dass** der Motor (4) fähig ist, eine über Kopplungseinrichtungen (19) drehfest mit der Kappe (13) verbundene Achse (18) zu drehen, um die Kappe (13) und das Rohr (9) zwischen der ersten und zweiten Position hin und her zu drehen.

7. Vorrichtung nach Anspruch 6, **dadurch gekennzeichnet, dass** die Kopplungseinrichtungen (19) ein an der Achse (18) befestigtes Teil (19) aufweisen, wobei die Kappe (13) Einrichtungen (131) für die lösbare Befestigung des Rohrs (9) aufweist, die ebenfalls zur Befestigung an dem an der Achse (18) befestigten Teil (19) dienen.

8. Vorrichtung nach einem der vorstehenden Ansprüche, **dadurch gekennzeichnet, dass** die Kappe (13) einen ersten und zweiten Anschlag (21,22) aufweist, die mit mindestens einem bezüglich des Ständers stationären Stopper (23) zusammenwirken, um durch Anschlag des Stoppers (23) an dem ersten bzw. zweiten Anschlag (21,22) die Drehung der Kappe (13) in der ersten bzw. zweiten Position zu stoppen.

9. Vorrichtung nach Anspruch 8, **dadurch gekennzeichnet, dass** sie eine mit automatischen Steuereinrichtungen zusammenwirkende Einrichtung (30) zum Detektieren der Annäherung an die erste Position und/oder an die zweite Position aufweist, um die Drehung des Motors (14) zu stoppen, bevor der Stopper (23) den entsprechenden Anschlag (21,22) berührt.

10. Vorrichtung nach Anspruch 9, **dadurch gekennzeichnet, dass** die Annäherungsdetektionseinrichtung (30) optisch ist, um die Anwesenheit einer Öffnung (311,312) oder einer Wand (313) in der Kappe (13) zu detektieren, derart, dass die Detektion eines Rands (314,315), der die Öffnung und die Wand voneinander abgrenzt, einer Winkelposition der Kappe (13) in der Nähe der ersten und/oder zweiten Position entspricht, ohne dass der Stopper (23) den entsprechenden Anschlag (21,22) berührt.
